# EUROPÄISCHE PATENTSCHRIFT

(11) **EP 1 158 262 B1**
(45) Veröffentlichungstag und Bekanntmachung des Hinweises auf die Patenterteilung: **17.10.2007**
(21) Anmeldenummer: 01106506.7
(22) Anmeldetag: 15.03.2001
(51) Int. Cl.: F41H 5/26, B60R 1/06

(54) **Rückblickspiegel für Panzerfahrzeug**
Rear-view mirror for armoured vehicle
Rétroviseur pour véhicule blindé

(30) Priorität: 20.05.2000 DE 10025143
(43) Veröffentlichungstag der Anmeldung: 28.11.2001
(73) Patentinhaber: Rheinmetall Landsysteme GmbH, 24107 Kiel (DE)
(72) Erfinder: George, Klaus-Degenhard, 24161 Altenholz (DE); Bösche, Hans-Dieter, 24796 Bredenbek (DE); Kühl, Manfred, 24229 Schwedeneck (DE)
(74) Vertreter: Dietrich, Barbara

(56) Entgegenhaltungen:
- DE-A- 2 634 215
- DE-A- 3 932 677
- US-A- 3 383 152

## Beschreibung

Bei gepanzerten Fahrzeugen mit eingebauten großkalibrigen Waffen ist der nach StVZO beidseits am vorderen Fahrzeug angebrachte, dem Fahrer des Fahrzeugs eine ausreichendie Rückwärtssicht im Fahrbetrieb gewährende Kraftfahrzeugspiegel großen Belastungen durch den Mündungsknall bei der Abfeuerung der Waffe ausgesetzt. Beispielsweise wird bei ungünstiger Elevation der Waffe und hoher Effizienz der Spiegel durch die Druckeinwirkung sogar zerstört. Diese Nachteile treten vor allem bei der Schußabgabe von Panzerkanonen und Panzerhaubitzen auf, wenn beispielsweise mit erhöhter Ladung eine Höchstreichweite erzielt werden soll.

Nach dem Stand der Technik wird dem Problem abgeholfen, indem kein Spiegelglas im Rückblickspiegel, sondern ein Metallblechspiegel mit spiegelähnlicher Oberflächenqualität verwendet wird. Das hat den Nachteil, dass die Sichtmöglichkeit für den Fahrer, vor allem bei schlechten Wetterverhältnissen und Dunkelheit, äußerst eingeschränkt wird, so dass die Verwendung dieses Spiegeltyps im öffentlichen Straßenverkehr grundsätzlich nicht gestattet ist.

DE 26 34 215 A1, welche eine Grundlage für den Anspruch 1 bildet, beschreibt einen Rückspiegel für Kraftfahrzeuge mit einem schalenförmigen, vorzugsweise dünnwandigen Gehäuse, das an seiner stirnseitigen Öffnung mit einer Spiegelscheibe versehen ist und an seiner Rückseite eine Halteinrichtung zur winkelverstellbaren Befestigung des Spiegels aufweist. Der zwischen dem Rücken des Spiegelgehäuses und der Spiegelscheibe liegende Innenhohlraum ist mit einer Kunststoffmasse aus Polyurethan vollständig ausgefüllt. Allein die Verbindungszonen zwischen dem Gehäuse und der Spiegelscheibe sind von der Kunststoffschaummasse freigehalten. Diese Kunststoffmasse dient dazu, die Stabilität des Spiegels insgesamt zu erhöhen. Insbesondere unterstützt sie die Spiegelscheibe, damit diese den auf sie ausgeübten Druckkräften besser widerstehen kann.

Mit der DE 39 32 677 A1 wird ein Weitwinkel-Periskop offenbart. Um eine verbesserte Sicht, Schutz gegen Laserstrahlen sowie einen verbesserten Schutz gegen Geschosseinschlag und Abdichtung gegen Regen und ABC-Stoffe zu schaffen, wird vorgeschlagen, das Gehäuse des Periskops trapezförmig zu gestalten, wobei ein oberes trapezförmiges Gehäuse mit einem kleineren unteren Gehäuse verbunden ist. Das untere trapezförmige Periskopgehäuse ist in gleichmäßig und eng voneinander beabstandete trapezförmige Öffnungen in den Rand einer Luke eingesetzt. Eingebunden sind hierbei schussfeste Abstandshalter. Zumindest im oberen Gehäuse ist ein oberes Stoßpolster vorgesehen, welches die Form der Rückwand des Gehäuses hat.

Mit der US 3,383,152 A wird ein Spiegelsystem publiziert, das zum Schutz und Halt des Spiegels mit Schaum ausgefüllt ist. Der Schaum ist ein Polyurethan, synthetisches Gummi, ein Polystyrene oder eine andere Plaste.

Aufgabe der Erfindung ist es, einen Spiegel herzustellen, der die genannten Nachteile vermeidet und die Benutzung eines gebrauchsfertig eingestellten Spiegels unter allen Abschussbedingungen erlaubt.

Gelöst wird diese Aufgabe durch die im Patentanspruch 1 angegebenen Merkmale.

Vorteilhafte Ausgestaltungen gehen aus den Merkmalen der Unteransprüche hervor.

Erfindungsgemäß wird zur Aufrechterhaltung der vollen StVZO-Fähigkeit ein Glasspiegeleinsatz oder sonstiger hochwertiger Einsatz verwendet und der Hohlraum zwischen Spiegeleinsatz und Spiegelgehäuse mit einem geeigneten Füllstoff ausgefüllt. Die elastische Füllmasse wird mittels einer Gewebeeinlage im Hohlraum gestützt oder stabilisiert.

Der Vorteil der Vorrichtung liegt in der Robustheit des Spiegels unter der Einwirkung von Druckstößen wie einem Mündungsknall und der vollen Beibehaltung der optimalen Sichteigenschaften des Spiegeleinsatzes. Das Spiegelgehäuse kann ohne Haltbarkeitseinbußen aus einem geeigneten Kunststoff hergestellt werden.

Für die Ausfüllung des Hohlraumes zwischen dem Spiegeleinsatz und dem Spiegelgehäuse können verschiedene elastische Füllmassen wie zum Beispiel ein Montageschaum mit geeigneten Eigenschaften und Temperatur- und Alterungsbeständigkeit verwendet werden.

Ein Montagebeispiel und eine Nachrüstung auch für vorhandene Spiegel erfolgt beispielsweise in den nachfolgenden Schritten: Spiegeldichtung entfernen, Spiegelglas abheben, Füllmasse in den Hohlraum einbringen, Spiegelglas aufsetzen und Dichtung wieder aufbringen. Die Füllmasse kann auch mittels vorhandener oder hergestellter Füll- und Entlüftungsbohrungen am Spiegelgehäuse in den Hohlraum eingebracht werden.

Versuche haben gezeigt, dass ein mit der Füllung versehener Glasspiegeleinsatz ohne Schaden dem Mündungsknall bei erhöhter Ladung standhält.

Auch ein Abklappen des Spiegels nach unten auf das Fahrzeuggehäuse, unter sehr extremen Bedingungen beispielsweise durch Heruntertreten und / oder Herunterschlagen durch Äste bei der Fahrt eines Panzerfahrzeuges durch das Gelände, ist zerstörungsfrei möglich.

Ein Ausführungsbeispiel der Erfindung ist in der Zeichnung schematisch dargestellt und wird nachfolgend näher beschrieben. Es zeigt:

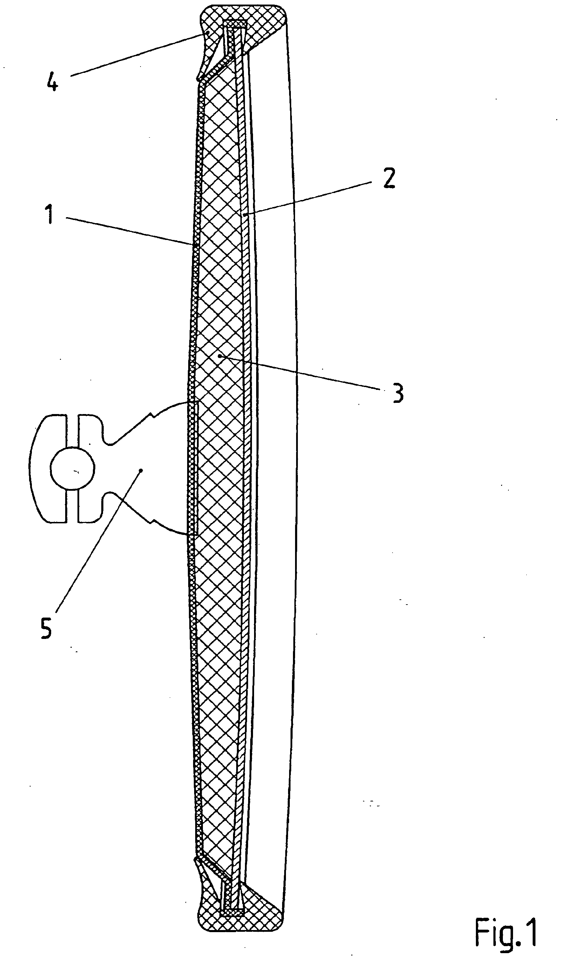

- Figur 1:: einen Querschnitt der Spiegelanordnung

Das Spiegelgehäuse 1 nimmt ein passend ausgeformtes Spiegelglas bzw. einen Spiegeleinsatz 2 an der Vorderseite mittels einer elastischen Dichtung 4 auf, so dass das Spiegelglas bzw. der Spiegeleinsatz 2 fest am Gehäuse 1 anliegt und gehalten wird. Ein Hohlraum 3 zwischen dem Spiegelglas 2 und einer Ausformung des Gehäuses 1 wird beispielsweise mit einem elastischen Schaum ausgefüllt. Das Spiegelgehäuse 1 wird mittels einer Anlenkung 5 und einer Spiegelstange (nicht dargestellt) an einem nicht dargestellten Fahrzeug befestigt.

## Patentansprüche

1. Kraftfahrzeug-Rückspiegel an Großkaliber-Waffe tragenden Panzerfahrzeugen mit einem Spiegelgehäuse (1), das einen Spiegeleinsatz (2) zur optimalen Lichtreflexion besitzt und den Spiegeleinsatz(2) mittels einer rundum laufenden elastischen Dichtung (4) hält, mit einer Anlenkung am Spiegelgehäuse (1) für die verstellbare Lagerung des Gehäuses (1) an einer Spiegelstange oder sonstigen Lagerung für die Befestigung an einem Fahrzeug, wobei
- in einem sich zwischen einem Spiegeleinsatz (2) und einer Ausformung des Gehäuses (1) bildenden Hohlraum (3) eine elastische Füllmasse eingebracht ist,
- der Hohlraum (3) mit der elastischen Füllmasse teilweise oder vollständig ausfüllt ist, und
- die elastische Füllmasse mittels einer Gewebeeinlage im Hohlraum (3) gestützt oder stabilisiert wird,
so daß der Spiegeleinsatz (2) ohne Schaden den Mündungsknall bei erhöhten Ladung standhält.

2. Rückspiegel nach Anspruch 1, **dadurch gekennzeichnet, dass** die elastische Füllmasse ein Kunststoffschaum oder eine sonstige elastische Füllmasse mit geeigneten Werkstoffeigenschaften mit Temperatur- und Alterungsbeständigkeit ist.

3. Rückspiegel nach der Anspruch 1 oder 2, **dadurch gekennzeichnet, dass** die Füllmasse in den Hohlraum (3) eingebracht wird oder eingelegt ist.

4. Rückspiegel nach einem der Ansprüche 1 bis 3, **dadurch gekennzeichnet, dass** die Füllmasse ein Korrosionsschutzmittel enthalten kann.

5. Rückspiegel nach einem der Ansprüche 1 bis 4, **dadurch gekennzeichnet, dass** Spiegelgehäuse (1) aus einem geeigneten Kunststoff hergestellt sein kann.

## Claims

1. Motor-vehicle rear-view mirror for armoured vehicles fitted with a large-calibre weapon, having a mirror housing (1) which has a mirror insert (2) for optimum light reflection and holds the mirror insert (2) by means of an elastic seal (4) running all the way around, having an articulated joint on the mirror housing (1) for adjustable mounting of the housing (1) on a mirror rod or other mounting for attachment to a vehicle, wherein
- an elastic filling compound is introduced into a cavity (3) which is formed between a mirror insert (2) and a recess in the housing (1),
- the cavity (3) is partially or completely filled with the elastic filling compound, and
- the elastic filling compound is supported or stabilized by means of a tissue insert in the cavity (3),
such that the mirror insert (2) withstands the muzzle shock with an increased charge, without damage.

2. Rear-view mirror according to Claim 1, **characterized in that** the elastic filling compound is a plastic foam or some other elastic filling compound with suitable material characteristics and resistant to temperature and aging.

3. Rear-view mirror according to Claim 1 or 2, **characterized in that** the filling compound is introduced or inserted into the cavity (3).

4. Rear-view mirror according to one of Claims 1 to 3, **characterized in that** the filling compound may contain a corrosion protection agent.

5. Rear-view mirror according to one of Claims 1 to 4, **characterized in that** the mirror housing (1) may be produced from a suitable plastic.

## Revendications

1. Rétroviseur de véhicule à moteur pour véhicule blindé équipé d'une arme de gros calibre, doté d'un boîtier (1) de rétroviseur comportant un insert (2) de rétroviseur pour une réflexion optimale de la lumière et maintenant l'insert (2) de rétroviseur au moyen d'un joint élastique (4) l'entourant entièrement, muni d'une jointure articulée sur le boîtier (1) de rétroviseur en vue d'un montage réglable du boîtier (1) sur une tige de rétroviseur ou une autre monture destinée à la fixation sur un véhicule, dans lequel
- un composé de remplissage élastique est introduit dans une cavité (3) formée entre un insert (2) de rétroviseur et un évidement dans le boîtier (1),
- une cavité (3) est partiellement ou totalement remplie du composé de remplissage élastique et
- le composé de remplissage élastique est soutenu ou stabilisé au moyen d'un insert en tissu dans la cavité (3),
de sorte que l'insert (2) de rétroviseur résiste sans dommage au souffle de la bouche avec une charge augmentée.

2. Rétroviseur selon la revendication 1, **caractérisé en ce que** le composé de remplissage élastique est une mousse plastique ou un autre composé de remplissage élastique présentant des caractéristiques de matériau appropriées et résistant à la température et au vieillissement.

3. Rétroviseur selon la revendication 1 ou 2, **caractérisé en ce que** le composé de remplissage est introduit ou inséré dans la cavité (3).

4. Rétroviseur selon l'une des revendications 1 à 3, **caractérisé en ce que** le composé de remplissage peut contenir un agent de protection contre la corrosion.

5. Rétroviseur selon l'une des revendications 1 à 4, **caractérisé en ce que** le boîtier (1) de rétroviseur peut être produit à partir d'un plastique approprié.
